# EUROPÄISCHE PATENTANMELDUNG

(11) **EP 1 657 805 A2**
(43) Veröffentlichungstag der Anmeldung: **17.05.2006**
(21) Anmeldenummer: 05023492.1
(22) Anmeldetag: 27.10.2005
(51) Int. Cl.: H02K 11/00

(54) **Vorrichtung zur Stromerzeugung mit fremderregtem Generator**

(30) Priorität: 12.11.2004 DE 102004054703
(71) Anmelder: MAN Nutzfahrzeuge Aktiengesellschaft, 80995 München (DE)
(72) Erfinder: Eisermann, Günter, 85757 Karlsfeld (DE)

(57) **Zusammenfassung**

Vorrichtung zur Stromerzeugung mit wenigstens einem fremderregten Generator, dessen Ausgangsspannung durch einen Regler einstellbar ist, und einer Temperaturschutzeinrichtung, dadurch gekennzeichnet, dass die Temperaturschutzeinrichtung wenigstens einen Temperatursensor (9) und eine an den wenigstens einen Temperatursensor (9) angeschlossene Auswerteeinrichtung (10) aufweist, welche den wenigstens einen elektrischen Generator (12) abschaltet oder entregt, wenn die vom Temperatursensor (9) gemessene Temperatur einen vorbestimmten Grenzwert überschreitet.

## Beschreibung

Die Erfindung betrifft eine Vorrichtung zur Stromerzeugung mit wenigstens einem fremderregten Generator, dessen Ausgangsspannung durch einen Regler einstellbar ist, wobei ein Übertemperaturschutz vorgesehen ist.

Aus DE 196 54 330 A1 ist ein Multifunktionsregler für einen Generator insbesondere Drehstromgenerator in Kraftfahrzeugen beschrieben. Der bekannte Multifunktionsregler beinhaltet einen Steuerchip und einen Leistungschip, wobei im Steuerchip neben anderen Funktionen ein Übertemperaturschutz zum Schutz des Reglers vor thermischer Zerstörung integriert ist.

Im Generator kann ein Lagerschaden dazu führen, das der Anker sich nicht mehr dreht oder nur mit überhöhtem Drehmoment gedreht werden kann. Die derzeit üblichen Riementriebe (Poly-V-Riemen bzw. Längsrippenriemen) sind so ausgestaltet, dass sie im Schadensfall nicht mehr von der Riemenscheibe abspringen. Dies führt zu hohem Schlupf und starkem Temperaturanstieg. Letztlich kann dies zum Brand des Riementriebs und der angrenzenden Peripherie führen. Ferner besteht die Gefahr, dass durch einen schleifenden Generatorläufer das Blechpaket des Stators in sich verschoben wird, wodurch in der Statorwicklung ein Kurzschluss entstehen kann. Aufgrund der Fremderregung des Generators bricht die Erregung nicht ein, sondern die erzeugte elektrische Leistung im Generator wird über den dann vorhandenen Kurzschluss regelrecht verheizt. Die starke Erwärmung kann zur Selbstzerstörung und zum Brand des Generators führen.

Aufgabe der Erfindung ist es eine Vorrichtung der eingangsgenannten Art zu schaffen, bei welcher eine durch im oder am Generator verursachte Brandgefahr verringert wird.

Diese Aufgabe wird durch die kennzeichnenden Merkmale des Patentanspruches 1 gelöst. Die Unteransprüche enthalten vorteilhafte Weiterbildung der Erfindung.

Bei der Erfindung weist die Temperaturschutzeinrichtung im Bereich des Generators wenigstens einen Temperatursensor auf. An den wenigstens einen Temperatursensor ist eine Auswerteeinrichtung angeschlossen, die den wenigstens einen elektrischen Generator dann abschaltet und entregt, wenn die vom jeweiligen Temperatursensor gemessene Temperatur einen vorbestimmten Grenzwert überschreitet.

Ein oder mehrere Temperatursensoren können in der Statorwicklung des Generators angeordnet sein. Ferner kann im Strömungsweg der von einem Lüfter bewegten Kühlluft für den Generator wenigstens ein Temperatursensor angeordnet sein. Hierzu können an einer oder mehreren Gehäuserippen des Generators ein oder mehrere Temperatursensoren vorgesehen sein.

Ferner kann bei einem von einem Riementrieb angetriebenen Generator wenigstens ein Temperatursensor im Bereich der Kraftübertragung vom Riementrieb auf die Läuferwelle des Generators angeordnet sein. Die Anordnung dieses Temperatursensors bzw. dieser Temperatursensoren erfolgt bevorzugt an der Außenseite des Antriebslagers, mit welchem die Läuferwelle am Generatorgehäuse gelagert ist.

Ferner kann ein sich anbahnender Lagerschaden durch einen Vibrationssensor, der vorzugsweise an der Gehäuseinnenseite angeordnet ist, am Generator in einem frühen Stadium erkannt werden. Die Bewertung der Vibrationssensorsignale erfolgt ebenfalls in der Auswerteeinrichtung. Die Auswerteeinrichtung kann elektronisch im Regler des Generators integriert sein.

Zur Generatorabschaltung oder Generatorentregung kann ein Regleranschluss, über welchen die Fremderregung des Generators erfolgt, auf ein verringertes Potential oder Massepotential gebracht werden. Die Abschaltung oder Entregung des Generators kann über eine Warnlampe oder ein anderes Warnsignal angezeigt werden.

Die Erfindung kann bei allen Generatoren mit elektronischen Reglern, welche in Schienen-, Strassen-, Wasser- und Luftfahrzeugen zum Einsatz kommen, verwendet werden. Vor allem verringert sie die Brandgefahr bei Generatoren, die über einen Riementrieb angetrieben werden.

Anhand der Figuren wird die Erfindung noch näher erläutert.

### Es zeigt

Fig. 1 ein Ausführungsbeispiel für einen Generator, bei welchem die Erfindung zum Einsatz kommt; und
Fig. 2 ein Schaltbild für eine Temperaturschutzeinrichtung, welche bei einem Generator, beispielsweise dem in Fig. 1 dargestellten Generator zum Einsatz kommen kann.

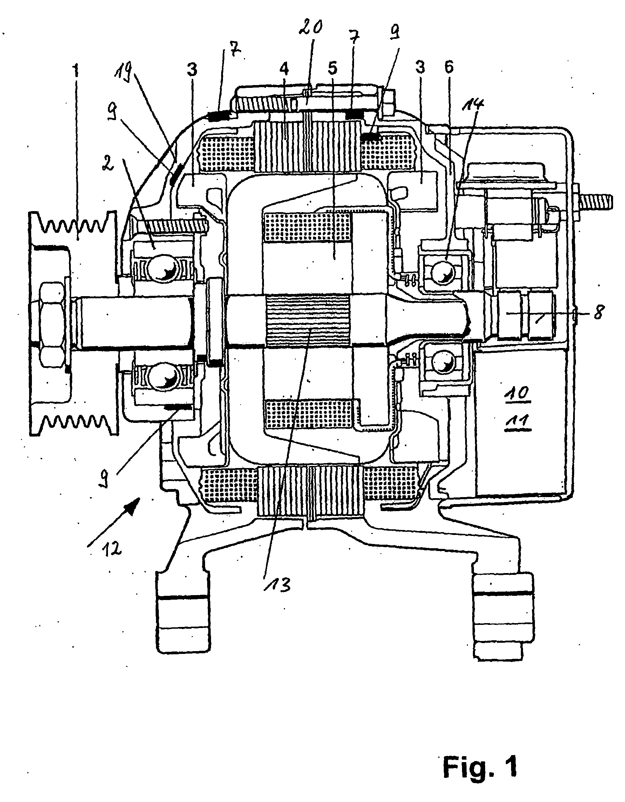

Ein in Fig. 1 dargestellter Generator 12 beinhaltet in herkömmlicher Weise einen Stator 4 und einen Läufer 5. Der Läufer 5 ist an einer Läuferwelle 13 gelagert und wird von einem Riementrieb 1, von welchem die an der Läuferwelle 13 befestigte Riemenscheibe dargestellt ist, angetrieben. Zur Kühlung des Generators werden Lüfter 3 mitangetrieben. Die Läuferwelle 13 ist in einem Antriebslager 2 und einem am rückwärtigen Teil in einem Lagerschild 6 angeordneten Lager 14 am Gehäuse des Generators gelagert. Am rückwärtigen Ende der Läuferwelle sitzen Schleifringe 8, welche mit Bürsten eines insbesondere elektronischen Feldreglers in bekannter Weise zusammenwirken.

Um frühzeitig eine erhöhte Temperatur im oder am Generator festzustellen, sind ein oder mehrere Temperatursensoren 9 vorgesehen. Beispielsweise kann ein Temperatursensor oder können mehrere Temperatursensoren 9 im Bereich des Riementriebs, insbesondere an der Außenseite des Antriebslagers 2 vorgesehen sein. Eine weitere bevorzugte Anordnung für einen oder mehrere Temperatursensoren 9 ist die Anordnung in der Kühlluft, welche vom Lüfter 3 bewegt wird. Hierzu können vorzugsweise ein oder mehrere Temperatursensoren 9 an einer oder mehreren Gehäuserippen 19 angeordnet sein. Eine weitere bevorzugte Anordnung von einem oder mehreren Temperatursensoren 9 erfolgt in der Wicklung des Stators 4.

Um einen sich anbahnenden Lagerschaden frühzeitig erkennen zu können, sind beim dargestellten Ausführungsbeispiel an der Innenseite des Generatorgehäuses ein oder mehrere Vibrationssensoren 7 vorgesehen. Der Vibrationssensor 7 befindet sich an einem Gehäuseteil, welcher entfernt von der Befestigungsstelle liegt, mit dem das Generatorgehäuse an einem Aufbau, beispielsweise Fahrzeugaufbau oder dergleichen befestigt ist.

Das dargestellte Ausführungsbeispiel des Generators 12 besitzt ein zweiteiliges Gehäuse, dessen vordere und hintere Gehäuseschalen durch Schraubenverbindungen 20 zusammengehalten werden. Um ein unbehindertes Öffnen des Gehäuses zu ermöglichen, sind nicht näher dargestellte Verbindungsleitungen, welche von den Temperatursensoren 9 und den Vibrationssensoren 7 zu einer Auswerteeinrichtung 10, die als elektronische Einrichtung auch im vorzugsweise elektronischen Regler 11 integriert sein kann, zu ermöglichen, sind die Leitungen oder ist das Kabel, in welchem die Zuleitungen untergebracht sind, in einer entsprechenden Schleife im Gehäuseinnern angeordnet. Die Auswerteeinrichtung 10 bzw. der Regler 11 ist in einem Anbau des Generators 12 angeordnet.

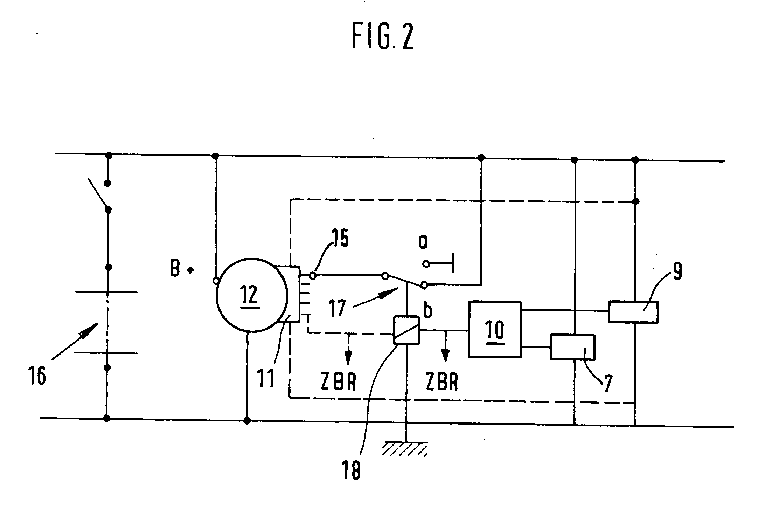

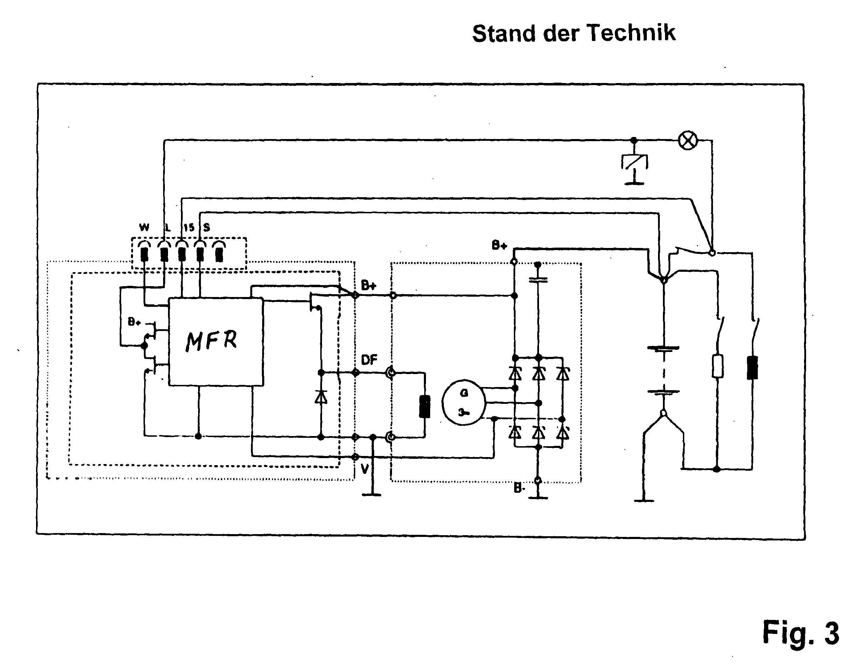

Anhand der Fig. 2 wird die Funktionsweise der Erfindung noch näher erläutert.

Im normalen Fahrbetrieb versorgt der Generator 12 über seine Klemme B+ nicht näher dargestellte elektrische und elektronische Verbraucher mit der notwendigen Energie. Ferner übernimmt er die Ladung eines Akkumulators 16, welcher beispielsweise aus einer oder mehreren Fahrzeugbatterien bestehen kann.

Beim Starten eines Motors, der den Generator 12 über den Riementrieb 1 antreibt, ist es erforderlich, den Generator 12 fremd zu erregen. Dabei wird vom Akkumulator 16 über einen Anschluss 15 dem Regler 12 Strom zugeführt, wodurch die Vorerregung des Generators gesteuert wird.

Um während des Generatorbetriebs einen Temperaturanstieg, welcher beispielsweise durch Lagerschaden und daraus resultierendem Kurzschluss verursacht wurde, im oder am Generator 12 zu erfassen, ist der wenigstens eine Temperatursensor 9 vorgesehen, welcher an die Auswerteeinrichtung 10 angeschlossen ist. Der Temperatursensor 9 kann auch stellvertretend für mehrere Temperatursensoren sein.

Um frühzeitig einen sich anbahnenden Lagerschaden erkennen zu können, ist der wenigstens eine Vibrationssensor 7 ebenfalls an die vorzugsweise als elektronische Einrichtung ausgebildete Auswerteeinrichtung 10 angeschlossen. Die von dem oder den Temperatursensoren 9 gelieferten Temperaturmesssignale und/oder von dem oder den Vibrationssensoren 7 gelieferten Schwingungssignale werden in der Auswerteschaltung 10 ausgewertet.

Ergibt die Bewertung eine Überschreitung von festgelegten oberen Temperaturgrenzwerten während einer bestimmten Zeitdauer wird der Generator 12 entregt oder abgeschaltet. Dies kann dadurch geschehen, dass der Anschluss 15 insbesondere auf Massepotential abgesenkt wird.

Hierzu kann, wie aus der Fig. 2 zu ersehen ist, die Auswerteeinrichtung 10 einen beispielsweise von einem Relais 18 betätigten Schalter 17 ansteuern. Der im Normalbetrieb in der Schaltposition b befindliche Kontakt des Schalters 17 wird in die Schaltposition a gebracht und dort mit Masse verbunden. Die Auswerteeinrichtung 10, welche vorzugsweise als elektronische Auswerteeinrichtung ausgebildet ist, kann auch in den elektronischen Regler 11 des Generators 12 integriert sein. Hierzu werden, wie mit strichlierten Linien gezeigt ist, die Sensorsignale des Temperatursensors 9 und des Vibrationssensors 7 dem Reger 11 zugeleitet. Ferner kann an den zentralen Bordrechner ZBR ein dem Auswerteergebnis in der Auswerteeinrichtung 10 entsprechendes Signal geliefert werden. Dieses Signal kann zur Anzeige gebracht werden und in ein Datenprotokoll übernommen werden. Es ist jedoch auch möglich, durch das Signal, welches das Relais 18 ansteuert, die Inbetriebnahme einer Warnlampe zu veranlassen. Je nach Fehlererkennung kann die Auswerteeinrichtung 10 unterschiedliche Ausgangssignale liefern, so dass im zentralen Bordrechner ZBR überprüft werden kann, ob eine automatische Wiedereinschaltung des Generators 12 durch entsprechende Relaisbetätigung 18 erfolgen kann. Hierzu wird der Kontakt des Schalters 17 dann wieder in die in der Fig. 2 dargestellte Schaltposition b gebracht.

### Bezugszeichenliste

- 1: Riementrieb (Riemenscheibe)
- 2: Antriebslager
- 3: Lüfter
- 4: Stator
- 5: Läufer
- 6: Lagerschild
- 7: Vibrationssensor
- 8: Schleifringe
- 9: Temperatursensor
- 10: Auswerteeinrichtung
- 11: Regler
- 12: Generator
- 13: Läuferwelle
- 14: Lager
- 15: Regleranschluss
- 16: Akkumulator
- 17: Schalter
- 18: Relais
- 19: Gehäuserippe
- 20: Schraubenverbindung

## Patentansprüche

1. Vorrichtung zur Stromerzeugung mit wenigstens einem fremderregten Generator, dessen Ausgangsspannung durch einen Regler einstellbar ist, und einer Temperaturschutzeinrichtung, **dadurch gekennzeichnet, dass** die Temperaturschutzeinrichtung wenigstens einen Temperatursensor (9) und eine an den wenigstens einen Temperatursensor (9) angeschlossene Auswerteeinrichtung (10) aufweist, welche den wenigstens einen elektrischen Generator (12) abschaltet oder entregt, wenn die vom Temperatursensor (9) gemessene Temperatur einen vorbestimmten Grenzwert überschreitet.

2. Vorrichtung nach Anspruch 1, **dadurch gekennzeichnet, dass** der wenigstens eine Temperatursensor (9) in der Statorwicklung des Generators (12) angeordnet ist.

3. Vorrichtung nach Anspruch 1, **dadurch gekennzeichnet, dass** der wenigstens eine Temperatursensor (9) im Strömungsweg der von einem Lüfter (3) bewegten Kühlluft, insbesondere an einer Gehäuserippe (10) des Generators (12) angeordnet ist.

4. Vorrichtung nach Anspruch 1 oder 2, **dadurch gekennzeichnet, dass** bei einem von einem Riementrieb angetriebenen Generator (12), der wenigstens eine Temperatursensor (9) im Bereich der Kraftübertragung vom Riementrieb (1) auf die Läuferwelle (13) des Generators (12) angeordnet ist.

5. Vorrichtung nach Anspruch 1 oder 4, **dadurch gekennzeichnet, dass** der wenigstens eine Temperatursensor (9) an der Außenseite eines Antriebslagers (2), in welchem die Läuferwelle (13) gelagert ist, angeordnet ist.

6. Vorrichtung nach einem der Ansprüche 1 bis 5, **dadurch gekennzeichnet, dass** die Auswerteschaltung (10) im Regler (11) des Generators (12) vorgesehen ist.

7. Vorrichtung nach einem der Ansprüche 1 bis 6, **dadurch gekennzeichnet, dass** zur Abschaltung oder Entregung des Generators (12) ein Regleranschluss (15), welcher zur Fremderregung des Generators (12) an einem Akkumulator (16) angeschlossen ist, auf ein verringertes Potential, insbesondere Massepotential gebracht wird.

8. Vorrichtung nach einem der Ansprüche 1 bis 7, **dadurch gekennzeichnet, dass** an der Gehäuseinnenseite des Generators (12) wenigstens ein an die Auswerteschaltung (10) angeschlossener Vibrationssensor angeordnet ist.
